# EUROPEAN PATENT APPLICATION

(11) **EP 2 127 925 A2**
(43) Date of publication of application: **02.12.2009**
(21) Application number: 09006926.1
(22) Date of filing: 23.05.2009
(51) Int. Cl.: B60J 1/16, B60J 5/04

(54) **Sash window having prefabricated guide channel for construction**

(30) Priority: 27.05.2008 KR 20080049188
(71) Applicant: Volvo Construction Equipment Holding Sweden AB, 631 85 Eskilstuna (SE)
(72) Inventor: Gwak, Jung Gun, Changwon-si Gyeongsangnam-do (KR)
(74) Representative: Munk, Ludwig

(57) **Abstract**

A sash window having a prefabricated guide channel for construction equipment is provided, in which a prefabricated guide channel (14) for supporting sash glass (6) is detachably fixed to a sash frame (11) mounted on a cab, and thus, when the sash glass is damaged or replacement of the sash glass is required, the sash glass can be replaced in a state where the sash frame is fixed to the cab. The sash window having a prefabricated guide channel for construction equipment includes a sash frame (11) mounted on a cab, a first seal (12) seated in an inner seat groove (15) of the sash frame (11) to support an edge of a first sash glass (3), a guide channel (14) located outside the first seal (12) and detachably fixed to the sash frame (11), and a second seal (17) seated in an engagement groove (16) of the guide channel (14) to support an edge of a second sash glass (6).

## Description

### CROSS-REFERENCE TO RELATED APPLICATION

This application is based on and claims priority from Korean Patent Application No. 10-2008-0049188, filed on May 27, 2008 in the Korean Intellectual Property Office, the disclosure of which is incorporated herein in its entirety by reference.

### BACKGROUND OF THE INVENTION

### Field of the invention

The present invention relates to a sash window having a prefabricated guide channel for construction equipment that makes it possible to conveniently replace sash glass of the sash window of a cab of construction equipment such as an excavator or a commercial vehicle.

More particularly, the present invention relates to a sash window having a prefabricated guide channel for construction equipment, in which a prefabricated guide channel for supporting sash glass is detachably fixed to a sash frame mounted on a cab, and thus, when the sash glass is damaged or replacement of the sash glass is required, the sash glass can be replaced in a state where the sash frame is fixed to the cab.

### Description of the Prior Art

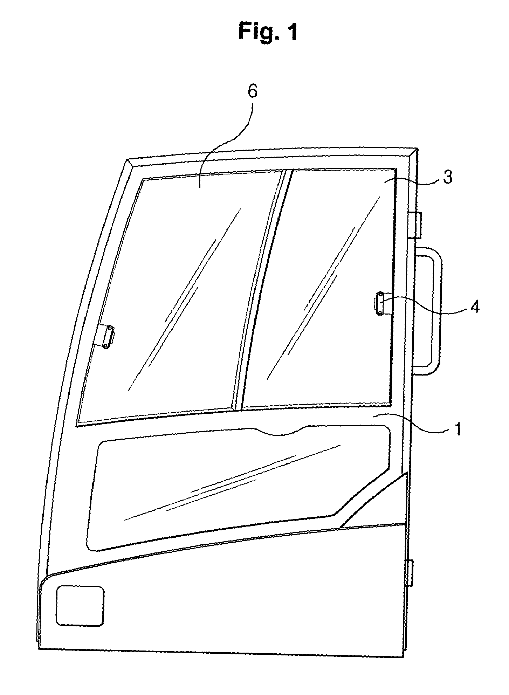

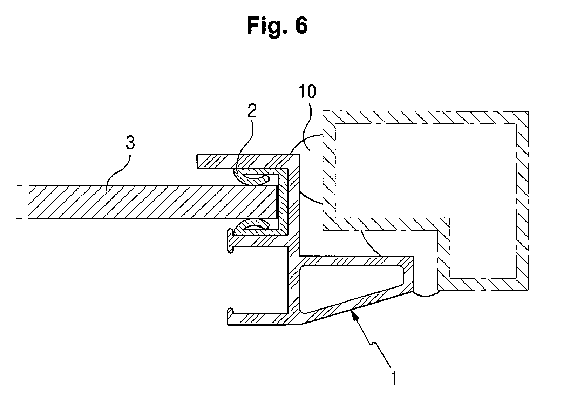

As illustrated in FIGS. 1 to 4 and 6, a conventional sash window for construction equipment includes sash glass 3 and 6 fitted into a seal 2 that is engaged in a sash frame 1 mounted on a cab to secure the visual field of an operator. The seal 2 prevents an inflow of foreign substances, such as rainwater, wind, dust, and the like, through a gap between the sash glass 3 and 6 and the sash frame 1. In this case, the sash frame 1 is mounted on the cab by using glue 10.

In the drawing, the unexplained drawing reference numeral "4" denotes a lock device for locking/unlocking the sash glass 3 and 6 into/from the sash frame 1 through a locker that is detachably engaged with a hook formed on the sash frame 1.

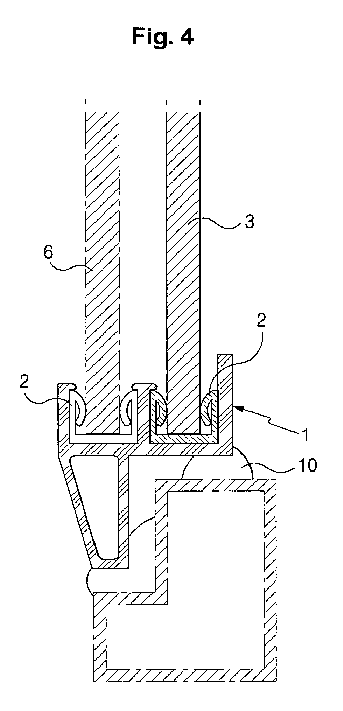

As illustrated in FIG. 4, according to the conventional sash window on which the sash frame is mounted, the sash frame 1, which is mounted on the cab by a seal (not illustrated) or the glue 10, is fixed in a body with the cab. Accordingly, in the case where the sash glass 3 and 6 fitted into the sash frame 1 is damaged or the replacement of the sash frame 1 is required in compliance with a customer's request, it is required to take the whole sash frame 1 away from the cab.

Accordingly, the working time for the replacement of the sash glass 3 and 6 is increased to lower the workability and to increase the post management cost, and thus the customer reliability is lowered.

### SUMMARY OF THE INVENTION

Accordingly, the present invention has been made to solve the above-mentioned problems occurring in the prior art, and an object of the present invention is to provide a sash window having a prefabricated guide channel for construction equipment, which makes it possible to replace sash glass in a state where a sash frame of a cab is fixed when the sash glass fitted into the sash frame is damaged or replacement of the sash glass is required, so that user convenience is increased and the post management cost is reduced due to the shortening of replacement time.

In order to accomplish this object, there is provided a sash window having a prefabricated guide channel for construction equipment, according to an embodiment of the present invention, which includes a sash frame mounted on a cab; a first seal seated in an inner seat groove of the sash frame to support an edge of a first sash glass; a guide channel located outside the first seal and detachably fixed to the sash frame; and a second seal seated in an engagement groove of the guide channel to support an edge of a second sash glass.

In a preferred embodiment of the present invention, a seat groove that corresponds to the shape of a head part of a fastening member is formed on the guide channel so as to prevent the fastening member from projecting from the guide channel when the guide channel is fixed to the sash frame by the fastening member.

### BRIEF DESCRIPTION OF THE DRAWINGS

The above and other objects, features and advantages of the present invention will be more apparent from the following detailed description taken in conjunction with the accompanying drawings, in which:
FIG. 1 is a schematic view illustrating a sash window mounted on a cab of construction equipment;
FIG. 2 is a front view of the sash window as illustrated in FIG. 1;
FIG. 3 is a sectional view of the sash window, taken along line A-A in FIG. 2;
FIG. 4 is a sectional view illustrating a conventional sash window, taken along line D-D in FIG. 2;
FIG. 5 is a sectional view illustrating a sash window according to an embodiment of the present invention, taken along line B-B in FIG. 2; and
FIG. 6 is an enlarged view of a part "C" as illustrated in FIG. 3.

### DETAILED DESCRIPTION OF THE PREFERRED EMBODIMENTS

Hereinafter, preferred embodiments of the present invention will be described with reference to the accompanying drawings. The matters defined in the description, such as the detailed construction and elements, are nothing but specific details provided to assist those of ordinary skill in the art in a comprehensive understanding of the invention, and thus the present invention is not limited thereto.

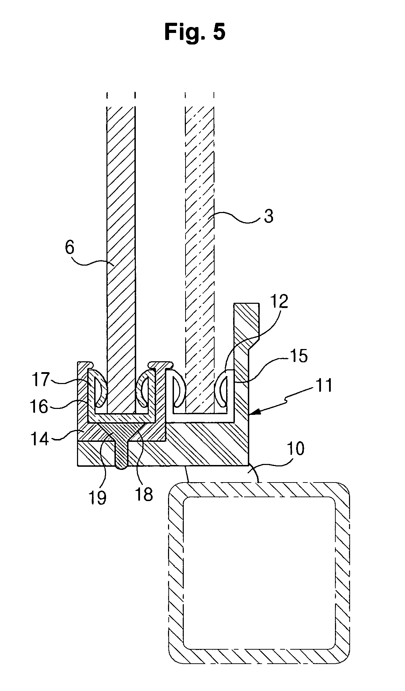

As illustrated in FIG. 5, a sash window having a prefabricated guide channel for construction equipment according to an embodiment of the present invention includes a sash frame 11 mounted on a cab of the construction equipment such as an excavator or a commercial vehicle; a first seal 12 seated in an inner seat groove 15 of the sash frame 11 to support an edge of a first sash glass 3 (e.g. the first seal 12 preventing an inflow of foreign substances, such as rainwater, wind, dust, and the like, into the cab through a gap between the sash frame 11 and the first sash glass 3); a guide channel 14 located outside the first seal 12 and detachably fixed to the sash frame 11 by a fastening member 19 (such as a flat head bolt); and a second seal 17 seated in an engagement groove 16 of the guide channel 14 to support an edge of a second sash glass 6 (e.g. the second seal 17 preventing an inflow of foreign substances, such as rainwater, wind, dust, and the like, into the cab through a gap between the guide channel 14 and the second sash glass 6).

A seat groove 18 that corresponds to the shape of a head part of the fastening member 19 is formed on the guide channel 14 so as to prevent the fastening member 19 from projecting from the guide channel 14 when the guide channel 14 is fixed to the sash frame 11 by the fastening member 19.

Hereinafter, the sash window having a prefabricated guide channel for construction equipment according to an embodiment of the present invention will be described in detail with reference to the accompanying drawings.

As illustrated in FIG. 5, the first sash glass 3 is slidably supported by the first seal 12 seated in the seat groove 15 of the sash frame 11, and the second sash glass 6 is slidably supported by the second seal 17 seated in the engagement groove 16 of the guide channel 14. Also, the guide channel 14 is fixed to the sash frame 11 by the fastening member 19 to complete the assembly of the sash window. The sash window can be mounted on the cab by using glue 10.

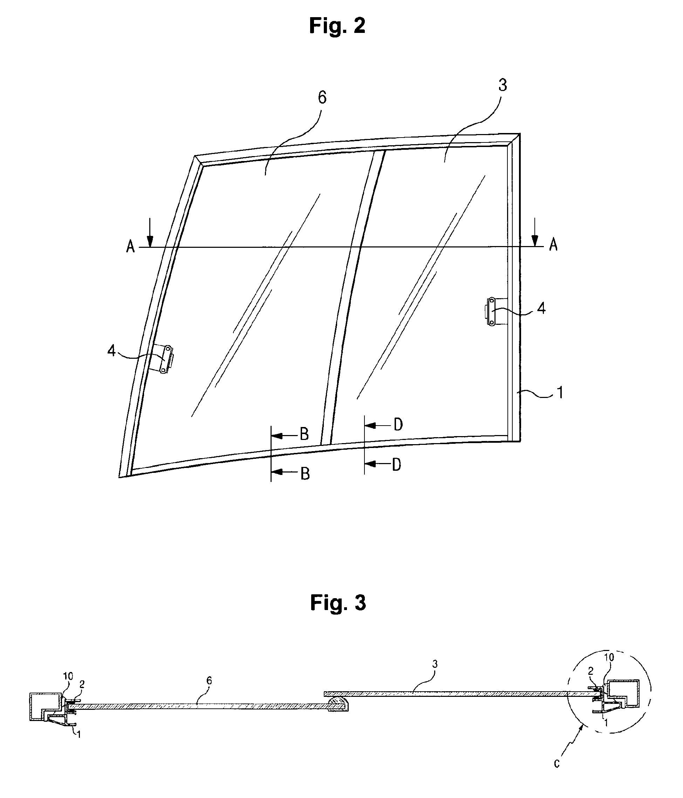

As illustrated in FIG. 5, in the case where the first or second sash glass 3 or 6 is damaged or replacement of the sash glass is required in compliance with a customer's request, one end part of the second seal 17 (i.e. the end part of the seal seated in a right direction of the guide channel 14 that is opened by sliding movement of the second sash glass 6 as shown in FIG. 2) is grasped and pulled to separate the second seal 17 from the engagement groove 16 of the guide channel 14.

At this time, the head part of the fastening member 19, by which the guide channel 14 is fixed to the sash frame 11, is exposed. After the fastening member 19 secedes from the guide channel 14 and the sash frame 11, the second sash glass 6 is slid and opened along the guide channel 14 in the right direction as shown in FIG. 2. Then, by grasping and pulling the other end part of the second seal 17 (i.e. the end part of the seal seated in a left direction of the guide channel 14 as shown in FIG. 2) upward, the second seal 17 is separated from the engagement groove 16 of the guide channel 14.

As the fastening member 19, by which the guide channel 14 is fixed to the sash frame 11, is released, the guide channel 14 is separated from the sash frame 11.

Accordingly, without the necessity of separating the sash frame 11 from the cab, the guide channel 14 is separated from the sash frame 11, and thus the first or second sash glass 3 or 6 can be conveniently separated.

As described above, the first sash glass 3 can be separated from the sash frame 11 by separating the first seal 12 from the seat groove 15 of the sash frame 11 after separating the guide channel 14, which is engaged with the second sash glass 6, from the sash frame 11 mounted on the cab.

As described above, the sash window having a prefabricated guide channel for construction equipment or a commercial vehicle according to an embodiment of the present invention has the following advantages.

When the sash glass fitted into the sash frame of the cab mounted on construction equipment or a commercial vehicle is damaged or replacement of the sash glass is required, it is possible to replace the sash glass in a state where the sash frame of the cab is fixed. Accordingly, user convenience is increased and the post management cost is reduced due to the shortening of the replacement time to heighten the customer satisfaction.

Although preferred embodiments of the present invention have been described for illustrative purposes, those skilled in the art will appreciate that various modifications, additions and substitutions are possible, without departing from the scope and spirit of the invention as disclosed in the accompanying claims.

## Claims

1. A sash window having a prefabricated guide channel for construction equipment, comprising:
a sash frame mounted on a cab;
a first seal seated in an inner seat groove of the sash frame to support an edge of a first sash glass;
a guide channel located outside the first seal and detachably fixed to the sash frame; and
a second seal seated in an engagement groove of the guide channel to support an edge of a second sash glass.

2. The sash window of claim 1, wherein a seat groove that corresponds to the shape of a head part of a fastening member is formed on the guide channel so as to prevent the fastening member from projecting from the guide channel when the guide channel is fixed to the sash frame by the fastening member.
